# EUROPEAN PATENT SPECIFICATION

(11) **EP 1 127 426 B1**
(45) Date of publication and mention of the grant of the patent: **22.03.2006**
(21) Application number: 99954034.7
(22) Date of filing: 27.10.1999
(51) Int. Cl.: H04L 29/06

(54) **PROCEDURE AND SYSTEM FOR IDENTIFYING AND BILLING A SUBSCRIBER ASSOCIATED WITH A SERVICE IN A TELECOMMUNICATION SYSTEM**
VERFAHREN UND SYSTEM ZUR IDENTIFIZIERUNG UND ANGEBÜHRUNG EINES MIT EINEM DIENST VERKNÜPFTEN TEILNEHMERS IN EINEN KOMMUNIKATIONSSYSTEM
PROCEDE D'IDENTIFICATION D'ABONNE ET DE FACTURATION D'UN SERVICE DANS UN SYSTEME DE TELECOMMUNICATIONS ET DISPOSITIF CORRESPONDANT

(30) Priority: 27.10.1998 FI 982336
(43) Date of publication of application: 29.08.2001
(73) Proprietor: TeliaSonera Finland Oyj, 00510 Helsinki (FI)
(72) Inventor: KOSKI, Jussi, FIN-00051 Sonera (FI); ROSTAS, Peter, FIN-00051 Sonera (FI)
(74) Representative: Simmelvuo, Markku Kalevi
(86) International application number: PCT/FI1999/000902
(87) International publication number: WO 2000/025477

(56) References cited:
- WO-A1-96/37848
- WO-A1-97/01920
- WO-A1-97/31306
- WO-A2-99/01990
- WO-A2-99/30293
- CA-A1- 2 161 983

## Description

### FIELD OF THE INVENTION

The present invention relates to telecommunication systems. In particular, the present invention concerns a procedure and a system for identifying and billing a subscriber associated with a service in a telecommunication system.

### BACKGROUND OF THE INVENTION

Telecommunication systems are undergoing continuous development. People and enterprises using telecommunication systems expect and assume that the services provided in conjunction with telecommunication systems will go on improving and growing more varied.

The Internet is a global complex of different telecommunication networks. Its basic idea is global addressing that allows each individual computer connected to it to be unambiguously located.

At present, the Internet is very popular and it is growing rapidly. There are Internet services such as electronic mail and the WWW (World Wide Web). Especially due to its ease of use and its world-wide nature, the WWW has become a global channel for the transmission of information.

The Internet has gathered around it a new channel for advertising and commerce. Various supplementary services produced in the Internet may be chargeable. Examples of this are e.g. various net publications, real-time news services, etc. The means of payment used include e.g. credit cards and electronic money. A condition for the implementation of services is that the user of a service be reliably identified so that the bill for the service is directed to the right party. For these services to gain more widespread popularity, security of communication in different telecommunication systems must be guaranteed. An implementation associated with chargeable supplementary services is e.g. one in which the services are based on separate systems built in WWW servers in which a registered user of a service is identified on the basis of a user identifier and a personal password. The identifier and password entered by the user are compared with information stored in a user register, and after successful identification the user is given access to the actual service. The passwords may be either permanent or changeable, being based e.g. on lists of passwords or on agreed algorithms.

In the solution described above, a problem is that the user identification system built in a WWW server requires registration of service users, a separate database, customer management and password management. The TCP/IP protocol (TCP, Transport Control Protocol; IP, Internet Protocol) is susceptible to interception, which means that at least static passwords do not necessarily guarantee security. Moreover, the billing of users for service transactions has to be implemented via a separate billing system or alternatively the service has to be integrated with an existing payment system in the Internet.

CA 2161983 relates to a method for bypassing Internet in the transfer of confidential information between a client and a server. In the method disclosed by CA 2161983 a user selects a chargeable content from a server. Thereupon, by means of the current HTML-page and the browser, the credit card and debit information are stored locally to the client computer and the browsing session is suspended. The browser establishes a telephone call to the credit card company and submits the credit card and debit information for the credit card company. Thereupon, the telephone call is terminated and the browsing session is resumed. The disadvantage of the method disclosed in CA 2161983 is that the introduction of an extra telephone line and the capability in the browser to set-up a call to the credit card company render the system more complicated. A further disadvantage lies also in that the credit card company must provide separate voice processing servers and access servers to collect the credit card and debit information transmitted using call signaling, DTMF-digits or via modem signals.

WO 97/01920 discloses a method for charging contents downloaded from the Internet by including them in fixed telephone charging records. In the method a user selects a chargeable content from a WWW-site. Thereupon, the WWW-site shows to the user a predefined service number to which the user must place a call. The service number responds to the user by providing an announcement, which tells that the charge is being collected. As the call has been successfully set-up, the WWW-site makes the chargeable content available for downloading by the user. The voice connection associated with the call may be used for providing music or other audio information to the user while using the chargeable information on the WWW-site. When the browsing session has been terminated or the user decides to clear the call, the charge for the contents downloaded is added to the charging record associated with the call. The disadvantage of the solution described in WO 97/01920 is that a fixed telephone subscription is required for the user in order to use chargeable connections. The solution also requires the setting-up of a telephone connection. The telephone connection must be maintained during the course of the browsing session involving the downloading of chargeable contents from the WWW-site. A further disadvantage lies also in that separate voice processing servers and access servers are required to collect the information transmitted using call signaling, DTMF-digits or via modem signals and to transmit that information to the content server associated with the WWW-site.

The object of the present invention is to eliminate the drawbacks referred to above or at least to significantly alleviate them.

A specific object of the invention is to disclose a new type of procedure and system for providing services requiring reliable user identification for mobile telephone subscribers, preferably GSM subscribers (GSM, Global System for Mobile communications) over the Internet. Further, the invention allows the billing for a service to be integrated with an existing mobile telephone billing system. This obviates the need for implementing separate user identification and billing system. The invention also allows the user to download chargeable contents without being required to place calls to specific service numbers. The downloading of contents is made independent of circuit switched calls. The chargeable contents may be downloaded any time after a unique identifier has been provided via a message to the mobile telephone billing system.

As for the features characteristic of the present invention, reference is made to the claims.

### SUBJECT OF THE INVENTION

The procedure of the invention concerns identification and billing of a subscriber in conjunction with a service in a telecommunication system. The system of the invention preferably comprises a first telecommunication network, a first telecommunication terminal connected to the first telecommunication network, and a second telecommunication network. Moreover, the system comprises a second telecommunication terminal, which is connected to the second telecommunication network. Furthermore, the system of the invention comprises a telecommunication server connected to the second telecommunication network and a billing server connected to both the first and the second telecommunication networks.

In the procedure of the invention, using the second telecommunication terminal, a telecommunication connection is established via the telecommunication server to the second telecommunication network. This means e.g. that a connection is set up via any service provider to the second telecommunication network, e.g. the Internet. The telecommunication server is preferably a WWW server. By means of the second telecommunication terminal, which is e.g. a computer, the user selects a desired service, a possible second party associated with the service, the mode of service and other parameters relating to the service. This is accomplished e.g. by selecting a HTML page (HTML, Hyper-Text Markup Language) created for a given service. From information supplied by the user and from possible attached information, an unambiguous identifier associated with the service in question is formed. The user sees the identifier e.g. on a new HTML page.

Based on the identifier received, using the first telecommunication terminal, the user sends a message of a given format to the billing server via the first telecommunication network. A short message is sent to a given predetermined short message number. In practice, this means e.g. that, in the case of a mobile communication network, the short message sent is first passed to a short message service center (SMS-C). The short message service center recognizes by a given part of the short message that it has to be sent further to the billing server. The short message to be sent may also contain other information relating to the service. The first telecommunication terminal is preferably a mobile station and the first telecommunication network is correspondingly a mobile communication network. If the mobile communication network is a GSM network, then the message to be sent is e.g. a SMS message (SMS, Short Message Service).

The sender of the message and the service selected by the sender are identified in the billing server on the basis of the identifier contained in the message sent. The information transmitted in the message is sufficient for the identification of the user. The sender of the message is identified e.g. on the basis of the MSISDN number (MSISDN, Mobile Station International ISDN Number) associated with an SMS message. The billing for the selected service is part of the business of the first telecommunication network. According to the invention, the billing is done in accordance with normal subscriber invoicing. If the first telecommunication network is a mobile communication network, then the user of the service is billed in conjunction with a normal mobile communication invoice.

The sender of the message can be sent a confirmation of execution of the selected service. The confirmation is sent e.g. as an SMS message or via a WWW connection.

The system comprises means for performing the functions described above.

The present invention has the advantage that chargeable Internet services can be provided for WWW users having a mobile telephone subscription, without their having to register themselves in a separate credit or digital cash system. The billing of service users can be implemented via the billing system of an existing mobile communication network, preferably a GSM network, without a separate user database and customer management.

### LIST OF ILLUSTRATIONS

In the following, the invention will be described in detail by the aid of a few embodiments, wherein
Fig. 1 presents a system according to the present invention, and
Fig. 2 presents a signalling flow diagram according to the present invention.

### DETAILED DESCRIPTION OF THE INVENTION

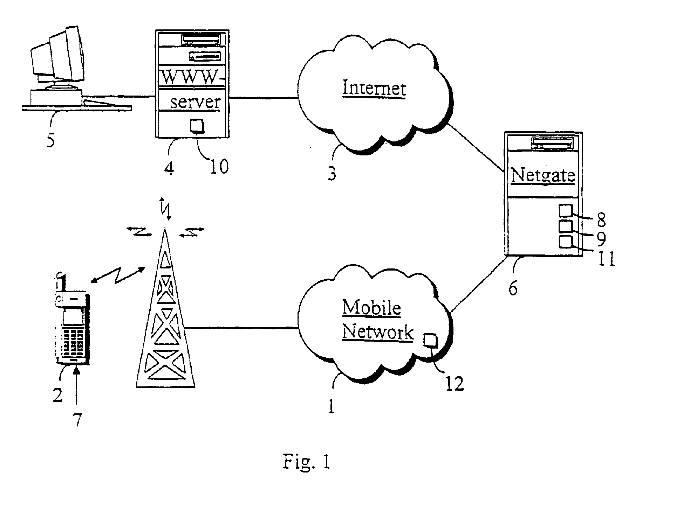

The system illustrated in Fig. 1 comprises a first telecommunication network 1, a first telecommunication terminal 2 connected to the first telecommunication network 1, and a second telecommunication network 3. Further, the system of the invention comprises a telecommunication server 4 connected to the second telecommunication network 3. Moreover, the system comprises a second telecommunication terminal 5 connected to the second telecommunication network 3 and a billing server 6 connected to both the first 1 and the second 3 telecommunication networks.

The first telecommunication terminal 2 comprises means 7 for sending a message of a given format on the basis of information contained in an identifier via the first telecommunication network 1 to the billing server 6. The billing server 6 comprises means 8 for identifying the sender of the message and/or the service associated with it in the billing server 6 on the basis of the message and/or its sender and means 9 for billing the sender of the message in accordance with the normal subscriber invoicing practice in the first telecommunication network 1. Moreover, the billing server 6 comprises means 11 for sending to the user of the service a confirmation of successful execution of the selected service in the form of an SMS message and/or over the second telecommunication network 3 via the telecommunication server 4 to the second telecommunication terminal 5 and/or in some other way.

The telecommunication server 4 comprises means 10 for adding to the identifier associated with the selected service a component identifying the service and/or a unique transaction-specific identifier and/or other information. In addition, the first telecommunication network 1 comprises means 12 for directing a received message to the billing server 6 on the basis of a predetermined identifier contained in the message.

In an embodiment as illustrated in Fig. 1, the user is sending an "electronic postcard". Using a second telecommunication terminal 5 as presented in Fig. 1, the user selects an appropriate HTML page in the WWW, e.g. the HTML page of his own mobile communication network operator. This page presents him the following alternatives: sending an electronic postcard
- to a GSM subscriber on the basis of a GSM number,
- as an electronic mail message to a given electronic mail address,
- as a printed postcard to the receiver's home address.

The page also contains a list of service charges. On the next page, the user fills in on the electronic postcard a title, a greeting text and a receiver specification and attaches to the card a desired digital picture. Having filled in the information relating to the postcard, the user confirms the transmission of the electronic postcard by means of a mobile telephone. For the transmission, the WWW server presents a new HTML page to the user. On this page, the user is asked to send a short message of a given format e.g. to the abbreviated number 400. The text message of a given format may contain e.g. a message like "Card 4275". The user sends the above-described message to a certain abbreviated number, which in this example is 400. The short message service center SMS-C of the mobile communication network directs the short message further to a server which handles short messages subject to a special charge; in the present example, this server is called Netgate. Generally, the text message of a given format contains a component identifying the service (Service ID) and a unique transaction-specific identifier (Transaction ID). The transaction-specific identifier contains possible service options and an unambiguous identifier generated by the server.

Netgate identifies the service in question by the example word "Card" (Service ID) appearing at the beginning of the message and generates a billing ticket concerning use of the service. Based on the billing ticket, the charge for the service is debited directly to the user in his mobile telephone invoice. Netgate transmits the numeric code "4275" (Transaction ID) and the user's mobile telephone number to an image server providing a WWW service. Based on these data, the image server activates the transmission of the card.

In the GSM network, the subscriber is identified by an effective authentication mechanism when a telephone containing a SIM card (SIM, Subscriber Identity Module) connects to the GSM network. In the mobile originated SMS message, the subscriber MSISDN number, verified by the above-mentioned authentication procedure, is transmitted to the short message service center. In this example, the sender of the message is identified by the MSISDN number.

The user receives an acknowledgement of receipt of the service request in the form of an SMS message. If the transmission of the card is not activated, then the image server will delete unsent cards after a certain delay. If the numeric code in the short message is incorrect, then the user is given an error message, e.g. "The card number you sent is incorrect".

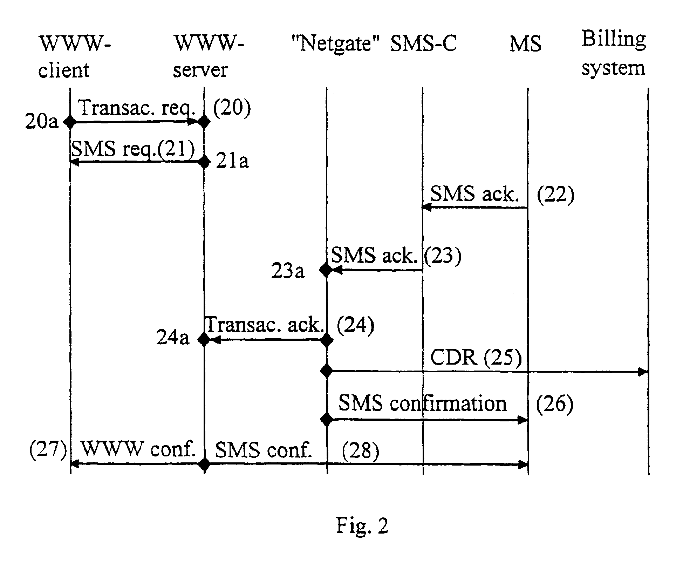

Fig. 2 presents a signalling flow diagram according to the invention. It describes the operation of the system of the invention, illustrating the communication between the various components. MS is a mobile station and "Netgate" is an example of a server providing chargeable SMS services. The lozenges in Fig. 2 represent internal processes or impulses in the components.

The user supplies the information (20a) required in the service, producing an action request to the WWW server (20). The WWW server interprets the information supplied and generates a unique transaction-specific identifier (Transaction-ID) (21a) from it. At the same time, it sends to the WWW-client a request relating to the service, containing a component identifying the service (Service ID) and a unique transaction-specific identifier (Transaction-ID). The request also contains the short message number to which the user is asked to send a text message.

Next, the user of the mobile station sends a text message to the above-mentioned short message number (22). The text message contains a component identifying the service and a unique transaction-specific identifier. The text message is first sent to the short message service center (SMS-C) (23) of the mobile communication network, which again is able to direct it to a server taking care of specially charged services. This server, which in this example is called "Netgate", generates a billing ticket (23a) from the service. In this example, the billing for the services is performed in accordance with the normal billing practice of the mobile communication network.

The server "Netgate" sends a notice about the transaction performed to the WWW server (24). The notice contains the billed MSISDN number and the transaction-specific identifier (Transaction-ID). The WWW server recognizes the identifier sent and, based on this, performs the actions (24a) comprised in the service requested. The billing ticket CDR (CDR, Call Detailed Record) generated from the service is sent to the billing system (25). A confirmation of the billing transaction can be sent to the mobile station in the form of an SMS message (26). The service user is sent a confirmation of successful execution of the service e.g. via the WWW connection (27) and/or as a SMS message (28).

The invention is not restricted to the examples of its embodiments described above, but many variations are possible within the scope of the inventive idea defined in the claims.

## Claims

1. Procedure for identifying and billing a subscriber associated with a service in a telecommunication system, the system comprising
a first telecommunication network (1),
a first telecommunication terminal (2), which is connected to the first telecommunication network (1),
a second telecommunication network (3),
a telecommunication server (4), which is connected to the second telecommunication network (3),
a second telecommunication terminal (5), which is connected to the telecommunication server (4),
a billing server (6), which is connected to the first and the second telecommunication networks (1,3),
said procedure comprising the steps of:
establishing a telecommunication connection by means of the second telecommunication terminal (5) via the telecommunication server (4) to the second telecommunication network (3),
selecting by means of the second telecommunication terminal (5) a desired service, a possible second party associated with the service, the mode of service and other parameters relating to the service,
generating on the basis of this information an unambiguous identifier associated with the selected service for the service user,
**characterized in that** the procedure comprises the steps of:
sending on the basis of the information contained in the identifier a message of a given format to the billing server (6) over the first telecommunication network (1) by means of the first telecommunication terminal (2);
identifying in the billing server (6) the sender of the message and/or the service associated with the message on the basis of the message and/or its sender; and
billing the sender of the message in accordance with the normal invoicing practice of the first telecommunication network (1).

2. Procedure as defined in claim 1, **characterized in that** a component identifying the service and/or a unique transaction-specific identifier and/or other information is added to the identifier associated with the selected service.

3. Procedure as defined in claim 1 or 2, **characterized in that** the message sent to the billing server (6) on the basis of the information contained in the identifier by means of the first telecommunication terminal (2) over the first telecommunication network (1) is sent in the form of an SMS message.

4. Procedure as defined in any one of claims 1 - 3, **characterized in that** the sender of the message is identified in the billing server (6) on the basis of the MSISDN number.

5. Procedure as defined in any one of claims 1 - 4, **characterized in that** a confirmation of successful execution of the service is sent to the user of the service.

6. Procedure as defined in any one of claims 1 - 5, **characterized in that** the confirmation of successful execution of the selected service is sent to the service user in the form of an SMS message and/or over the second telecommunication network (3) via the telecommunication server (4) to the second telecommunication terminal (5).

7. Procedure as defined in any one of claims 1 - 6, **characterized in that** the message received in the first telecommunication network (1) is directed to the billing server (6) on the basis of the predetermined identifier contained in the message.

8. System for identifying and billing a subscriber associated with a service in a telecommunication system, the system comprising
a first telecommunication network (1),
a first telecommunication terminal (2), which is connected to the first telecommunication network (1),
a second telecommunication network (3),
a second telecommunication terminal (5), which is connected to the telecommunication server (4), for establishing a telecommunication connection via the telecommunication server (4) to the second telecommunication network (3), for selecting a desired service, a possible second party associated with the service, the mode of service and other parameters relating to the service,
a telecommunication server (4), which is connected to the second telecommunication network (3), for generating on the basis of information supplied by the service user, an unambiguous identifier associated with said service for the service user, and
a billing server (6), which is connected to the first and the second telecommunication networks (1,3),
**characterized in that** the system comprises:
means (7) for sending on the basis of the information contained in the identifier a message of a given format to the billing server (6) over the first telecommunication network (1) by means of the first telecommunication terminal (2),
means (8) for identifying in the billing server (6) the sender of the message and/or the service associated with the message on the basis of the message and/or its sender, and
means (9) for billing the sender of the message in accordance with the normal invoicing practice of the first telecommunication network (1).

9. System as defined in claim 8, **characterized in that** the system comprises means (10) for adding a component identifying the service and/or a unique transaction-specific identifier and/or other information to the identifier associated with the selected service.

10. System as defined in claim 8 or 9, **characterized in that** the billing server (6) comprises means (8) for authenticating the sender of the message on the basis of the MSISDN number.

11. System as defined in any one of claims 8 - 10, **characterized in that** the system comprises means (11) for sending a confirmation of successful execution of the selected service to the service user in the form of an SMS message and/or over the second telecommunication network (3) via the telecommunication server (4) to the second telecommunication terminal (5).

12. System as defined in any one of claims 8 - 11, **characterized in that** the system comprises means (12) for directing the message received in the first telecommunication network (1) to the billing server (6) on the basis of a predetermined identifier contained in the message.

13. System as defined in any one of claims 8 - 12, **characterized in that** the first telecommunication network (1) is a mobile communication network.

14. System as defined in any one of claims 8 - 13, **characterized in that** the second telecommunication network (3) is the Internet.

15. System as defined in any one of claims 8 - 14, **characterized in that** the first telecommunication terminals (2) is a mobile station.

16. System as defined in any one of claims 8 - 15, **characterized in that** the second telecommunication terminal (5) is a computer.

17. System as defined in any one of claims 8 - 16, **characterized in that** the telecommunication server (4) is a WWW server.

## Revendications

1. Procédure pour identifier et facturer un abonné associé à un service dans un système de télécommunication, le système comprenant :
un premier réseau de télécommunication (1),
un premier terminal de télécommunication (2), qui est connecté au premier réseau de télécommunication (1),
un second réseau de télécommunication (3),
un serveur de télécommunication (4), qui est connecté au second réseau de télécommunication (3),
un second terminal de télécommunication (5), qui est connecté au serveur de télécommunication (4),
un serveur de facturation (6), qui est connecté aux premier et second réseaux de télécommunication (1, 3),
ladite procédure comprenant les étapes consistant à :
établir une connexion de télécommunication au moyen du second terminal de télécommunication (5), via le serveur de télécommunication (4) vers le second réseau de télécommunication (3),
sélectionner au moyen du second terminal de télécommunication (5) un service souhaité, un possible second correspondant associé au service, le mode de service et d'autres paramètres concernant le service,
générer, sur la base de ces informations, un identificateur univoque associé au service sélectionné pour l'utilisateur du service,
**caractérisée en ce que** la procédure comprend les étapes consistant à :
envoyer, sur la base des informations contenues dans l'identificateur, un message d'un format donné au serveur de facturation (6) sur le premier réseau de télécommunication (1) au moyen du premier terminal de télécommunication (2) ;
identifier dans le serveur de facturation (6) l'expéditeur du message et/ou le service associé au message sur la base du message et/ou de son expéditeur ; et
facturer l'expéditeur du message en accord avec la pratique de facturation normale du premier réseau de télécommunication (1).

2. Procédure telle que définie dans la revendication 1, **caractérisée en ce qu'**un composant identifiant le service et/ou un identificateur spécifique à une transaction unique et/ou d'autres informations sont ajoutés à l'identificateur associé au service sélectionné.

3. Procédure telle que définie dans les revendications 1 ou 2, **caractérisée en ce que** le message envoyé au serveur de facturation (6) sur la base des informations contenues dans l'identificateur au moyen du premier terminal de télécommunication (2) sur le premier réseau de télécommunication (1) est envoyé sous la forme d'un message SMS.

4. Procédure telle que définie dans l'une quelconque des revendications 1 à 3, **caractérisée en ce que** l'expéditeur du message est identifié dans le serveur de facturation (6) sur la base du numéro MSISDN.

5. Procédure telle que définie dans l'une quelconque des revendications 1 à 4, **caractérisée en ce qu'**une confirmation d'une exécution réussie du service est envoyée à l'utilisateur du service.

6. Procédure telle que revendiquée dans l'une quelconque des revendications 1 à 5, **caractérisée en ce que** la confirmation de l'exécution réussie du service sélectionné est envoyée à l'utilisateur du service sous la forme d'un message SMS et/ou sur le second réseau de télécommunication (3), via le serveur de télécommunication (4) vers le terminal de télécommunication (5).

7. Procédure telle que définie dans l'une quelconque des revendications 1 à 6, **caractérisée en ce que** le message reçu dans le premier réseau de télécommunication (1) est dirigé vers le serveur de facturation (6) sur la base de l'identificateur prédéterminé contenu dans le message.

8. Système pour identifier et facturer un abonné associé à un service dans un système de télécommunication, le système comprenant :
un premier réseau de télécommunication (1),
un premier terminal de télécommunication (2), qui est connecté au premier réseau de télécommunication (1),
un second réseau de télécommunication (3),
un second terminal de télécommunication (5), qui est connecté au serveur de télécommunication (4), pour établir une connexion de télécommunication, via le serveur de télécommunication (4), vers le second réseau de télécommunication (3), pour sélectionner un service souhaité, un possible second correspondant associé au service, le mode de service et d'autres paramètres concernant le service,
un serveur de télécommunication (4), qui est connecté au second réseau de télécommunication (3), pour générer, sur la base des informations délivrées par l'utilisateur du service, un identificateur univoque associé au dit service pour l'utilisateur du service, et
un serveur de facturation (6), qui est connecté au premier et au second réseaux de télécommunication (1, 3),
**caractérisé en ce que** le système comprend :
des moyens (7) pour envoyer, sur la base des informations contenues dans l'identificateur, un message d'un format donné au serveur de facturation (6) sur le premier réseau de télécommunication (1) au moyen du premier terminal de télécommunication (2),
des moyens (8) pour identifier le serveur de facturation (6), l'expéditeur du message et/ou le service associé au message sur la base du message et/ou de son expéditeur, et
des moyens (9) pour facturer l'expéditeur du message en accord avec la pratique de facturation normale du premier réseau de télécommunication (1).

9. Système tel que défini dans la revendication 8, **caractérisé en ce que** le système comprend des moyens (10) pour ajouter un composant identifiant le service et/ou un identificateur spécifique à une transaction unique et/ou d'autres informations à l'identificateur associé au service sélectionné.

10. Système tel que défini dans les revendications 8 ou 9, **caractérisé en ce que** le serveur de facturation (6) comprend des moyens (8) pour authentifier l'expéditeur du message sur la base du numéro MSISDN.

11. Système tel que défini dans l'une quelconque des revendications 8 à 10, **caractérisé en ce que** le système comprend des moyens (11) pour envoyer une confirmation d'une exécution réussie du service sélectionné à l'utilisateur du service sous la forme d'un message SMS et/ou sur le second réseau de télécommunication (3), via le serveur de télécommunication (4) vers le second terminal de télécommunication (5).

12. Système tel que défini dans l'une quelconque des revendications 8 à 11, **caractérisé en ce que** le système comprend des moyens (12) pour diriger le message reçu dans le premier réseau de télécommunication (1) vers le serveur de facturation (6) sur la base d'un identificateur prédéterminé contenu dans le message.

13. Système tel que défini dans l'une quelconque des revendications 8 à 12, **caractérisé en ce que** le premier réseau de télécommunication (1) est un réseau de télécommunication mobile.

14. Système tel que défini dans l'une quelconque des revendications 8 à 13, **caractérisé en ce que** le second réseau de télécommunication (3) est le réseau Internet.

15. Système tel que défini dans l'une quelconque des revendications 8 à 14, **caractérisé en ce que** le premier terminal de télécommunication (2) est une station mobile.

16. Système tel que défini dans l'une quelconque des revendications 8 à 15, **caractérisé en ce que** le second terminal de télécommunication (5) est un ordinateur.

17. Système tel que défini dans l'une quelconque des revendications 8 à 16, **caractérisé en ce que** le serveur de télécommunication (4) est un serveur WWW.

## Patentansprüche

1. Verfahren zum Identifizieren und zum Gebührenbelasten eines mit einem Service bzw. Dienst verknüpften Teilnehmers in einem Telekommunikationssystem, wobei das System aufweist:
ein erstes Telekommunikationsnetzwerk (1), ein erstes Telekommunikationsendgerät (2), welches mit dem ersten Telekommunikationsnetzwerk (1) verbunden ist,
ein zweites Telekommunikationsnetzwerk (3),
einen Telekommunikationsserver (4), welcher mit dem zweiten Telekommunikationsnetzwerk (3) verbunden ist,
ein zweites Telekommunikationsendgerät (5), welches mit dem Telekommunikationsserver (4) verbunden ist,
einen Gebührenbelastungs- bzw. Rechnungsstellungsserver (6), welcher mit dem ersten und dem zweiten Telekommunikationsnetzwerk (1, 3) verbunden ist,
wobei das Verfahren die Schritte aufweist:
Erstellen einer Telekommunikationsverbindung mit Hilfe des zweiten Telekommunikationsendgerätes (5) über den Telekommunikationsserver (4) mit dem zweiten Telekommunikationsnetzwerk (3),
Auswählen eines gewünschten Services bzw. Dienstes, einer möglichen zweiten Partei, welche mit dem Dienst verbunden ist, der Art des Dienstes und anderer Parameter, welche sich auf den Dienst beziehen, mit Hilfe des zweiten Telekommunikationsendgerätes (5),
Erzeugen einer unzweideutigen Kennung auf der Basis dieser mit dem ausgewählten Dienst verknüpften Information für den Nutzer des Dienstes,
**dadurch gekennzeichnet, dass** das Verfahren die Schritte aufweist von:
Senden einer Nachricht mit einem gegebenen Format an den Rechnungsstellungsserver (6) über das erste Telekommunikationsnetzwerk (1) mit Hilfe des ersten Telekommunikationsendgerätes (2) auf der Basis der Information, welche in der Kennung enthalten ist;
Identifizieren des Senders der Nachricht und/oder des Dienstes, welcher mit der Nachricht verbunden ist, auf der Basis der Nachricht und/oder deren Sender in dem Rechnungsstellungsserver (6); und
Gebührenbelasten des Senders der Nachricht entsprechend der normalen Rechnungsstellungspraxis des ersten Telekommunikationsnetzwerks (1).

2. Verfahren nach Anspruch 1, **dadurch gekennzeichnet, dass** eine Komponente, welche den Dienst und/oder eine einzigartige transaktionsspezifische Kennung und/oder andere Information identifiziert, an die mit dem ausgewählten Dienst verknüpfte Kennung hinzugefügt wird.

3. Verfahren nach Anspruch 1 oder 2, **dadurch gekennzeichnet, dass** die Nachricht, welche an den Rechnungsstellungsserver (6) auf der Basis der Information gesendet wird, welche in der Kennung enthalten ist, mit Hilfe des ersten Telekommunikationsendgerätes (2) über das erste Telekommunikationsnetzwerk (1) in Form einer SMS-Nachricht gesendet wird.

4. Verfahren nach einem der Ansprüche 1 bis 3, **dadurch gekennzeichnet, dass** der Sender der Nachricht in dem Rechnungsstellungsserver (6) auf der Basis der MSISDN-Nummer identifiziert wird.

5. Verfahren nach einem der Ansprüche 1 bis 4, **dadurch gekennzeichnet, dass** eine Bestätigung einer erfolgreichen Ausführung des Dienstes an den Nutzer des Dienstes gesandt wird.

6. Verfahren nach einem der Ansprüche 1 bis 5, **dadurch gekennzeichnet, dass** die Bestätigung einer erfolgreichen Ausführung des ausgewählten Dienstes an den Nutzer des Dienstes in Form einer SMS-Nachricht und/oder über das zweite Telekommunikationsnetzwerk (3) durch den Telekommunikationsserver (4) an das zweite Telekommunikationsendgerät (5) gesandt wird.

7. Verfahren nach einem der Ansprüche 1 bis 6, **dadurch gekennzeichnet, dass** die Nachricht, welche in dem ersten Telekommunikationsnetzwerk (1) empfangen wird, an den Rechnungsstellungsserver (6) auf der Basis der vorher festgelegten Kennung, die in der Nachricht enthalten ist, gerichtet wird.

8. System zum ldentifizieren und Gebührenbelasten eines Teilnehmers, der mit einem Dienst in einem Telekommunikationssystem verbunden ist, wobei das System aufweist:
ein erstes Telekommunikationsnetzwerk (1),
ein erstes Telekommunikationsendgerät (2), welches mit dem ersten Telekommunikationsnetzwerk (1) verbunden ist,
ein zweites Telekommunikationsnetzwerk (3),
ein zweites Telekommunikationsendgerät (5), welches mit dem Telekommunikationsserver (4) verbunden ist, zum Erstellen einer Telekommunikationsverbindung über den Telekommunikationsserver (4) zu dem zweiten Telekommunikationsnetzwerk (3), um einen gewünschten Dienst, eine mögliche zweite Partei, welche mit dem Dienst verbunden ist, die Art des Dienstes und andere mit dem Dienst verknüpfte Parameter auszuwählen, einen Telekommunikationsserver (4), welcher mit dem zweiten Telekommunikationsnetzwerk (3) verbunden ist, um auf der Basis von Information, welche durch den Nutzer des Dienstes erzeugt wird, eine unzweideutige Kennung, welche mit dem Dienst verbunden ist, für den Nutzer des Dienstes zu erzeugen, und
einen Rechnungsstellungsserver (6), welcher mit dem ersten und dem zweiten Telekommunikationsnetzwerk (1, 3) verbunden ist,
**dadurch gekennzeichnet, dass** das System aufweist:
eine Vorrichtung (7) zum Senden, einer Nachricht mit einem gegebenen Format an den Rechnungsstellungsserver (6) über das erste Telekommunikationsnetzwerk (1) mit Hilfe des ersten Telekommunikationsendgerätes (2), auf der Basis der Information, welche in der Kennung enthalten ist,
eine Vorrichtung (8) zum ldentifizieren in dem Rechnungsstellungsserver (6) des Senders der Nachricht und/oder des Dienstes, welcher mit der Nachricht verbunden ist, auf der Basis der Nachricht und/oder deren Sender, und
eine Vorrichtung (9) zum Rechnungsstellen bzw. Gebührenbelasten des Senders der Nachricht entsprechend der normalen Rechnungsstellungspraxis des ersten Telekommunikationsnetzwerkes (1).

9. System nach Anspruch 8, **dadurch gekennzeichnet, dass** das System eine Vorrichtung (10) zum Hinzufügen einer Komponente aufweist, welche den Dienst und/oder eine einzigartige transaktionsspezifische Kennung und/oder andere Information für die Kennung, welche mit dem ausgewählten Dienst verbunden ist, identifiziert.

10. System nach Anspruch 8 oder 9, **dadurch gekennzeichnet, dass** der Rechnungsstellungsserver (6) eine Vorrichtung (8) zum Beglaubigen des Senders der Nachricht auf der Basis der MSISDN-Nummer aufweist.

11. System nach einem der Ansprüche 8 bis 10, **dadurch gekennzeichnet, dass** das System eine Vorrichtung (11) aufweist, um eine Bestätigung einer erfolgreichen Ausführung des ausgewählten Dienstes an den Nutzer des Dienstes in Form einer SMS-Nachricht und/oder über das zweite Telekommunikationsnetzwerk (3) mit Hilfe des Telekommunikationsservers (4) an das zweite Telekommunikationsendgerät (5) zu senden.

12. System nach einem der Ansprüche 8 bis 11, **dadurch gekennzeichnet, dass** das System eine Vorrichtung (12) aufweist, zum Lenken der Nachricht, welche in dem ersten Telekommunikationsnetzwerk (1) empfangen wird, an den Rechnungsstellungsserver (6) auf der Basis einer vorher festgelegten Kennung, die in der Nachricht enthalten ist.

13. System nach einem der Ansprüche 8 bis 12, **dadurch gekennzeichnet, dass** das erste Telekommunikationsnetzwerk (1) ein Mobilkommunikationsnetzwerk ist.

14. System nach einem der Ansprüche 8 bis 13, **dadurch gekennzeichnet, dass** das zweite Telekommunikationsnetzwerk (3) das Internet ist.

15. System nach einem der Ansprüche 8 bis 14, **dadurch gekennzeichnet, dass** das erste Telekommunikationsendgerät (2) ein Mobiltelefon ist.

16. System nach einem der Ansprüche 8 bis 15, **dadurch gekennzeichnet, dass** das zweite Telekommunikationsendgerät (5) ein Computer ist.

17. System nach einem der Ansprüche 8 bis 16, **dadurch gekennzeichnet, dass** der Telekommunikationsserver (4) ein WWW-Server ist.
